# EUROPÄISCHE PATENTSCHRIFT

(11) **EP 2 735 479 B1**
(45) Veröffentlichungstag und Bekanntmachung des Hinweises auf die Patenterteilung: **10.08.2016**
(21) Anmeldenummer: 13002959.8
(22) Anmeldetag: 08.06.2013
(51) Int. Cl.: B60R 11/00, B60P 7/08, B60N 2/24, F16B 37/04

(54) **BEFESTIGUNGSEINRICHTUNG FÜR AUSSTATTUNGSKOMPONENTEN IN EINEM KRAFTFAHRZEUG**
FIXING DEVICE FOR EQUIPMENT COMPONENTS IN A MOTOR VEHICLE
DISPOSITIF DE FIXATION POUR COMPOSANTS D'ÉQUIPEMENT DANS UN VÉHICULE AUTOMOBILE

(30) Priorität: 27.11.2012 DE 102012023128
(43) Veröffentlichungstag der Anmeldung: 28.05.2014
(73) Patentinhaber: MAN Truck & Bus AG, 80995 München (DE)
(72) Erfinder: Schmerbeck, Franz, 94522 Wallersdorf (DE); Kittel, Ralf, 80939 München (DE)
(74) Vertreter: v. Bezold & Partner Patentanwälte - PartG mbB

(56) Entgegenhaltungen:
- EP-A1- 0 803 403
- EP-A2- 0 857 592
- CH-A5- 612 381
- CH-A5- 630 574
- DE-A1- 2 635 439
- DE-A1- 2 719 455
- DE-A1- 3 424 690
- DE-A1- 4 215 259
- DE-A1- 10 041 899
- DE-A1- 10 113 667
- DE-U1- 20 016 400
- FR-A1- 2 926 062
- JP-A- 2006 341 781
- US-A- 5 051 047
- US-A1- 2011 115 256

## Beschreibung

Die Erfindung betrifft eine Befestigungseinrichtung zur Befestigung von Ausstattungskomponenten an einer Seitenwand im Innenraum eines Kraftfahrzeugs, insbesondere eines Omnibusses.

Bei Omnibussen werden Ausstattungskomponenten (z.B. Haltegriffe, Fensterschutzstangen, etc.) im Innenraum an der Seitenwand des Omnibusses befestigt, wobei die Befestigung der Ausstattungskomponenten üblicherweise durch eine Schraubverbindung erfolgt, welche die Ausstattungskomponenten an der Karosserie des Omnibusses befestigt.

Nachteilig an solchen Schraubverbindungen ist die Tatsache, dass eine Bohrung erforderlich ist und ein Gewinde geschnitten werden muss. Daraus ergeben sich wiederum Probleme mit Korrosion (Späne) und es entsteht ein hoher Aufwand bei Fehlbohrungen.

Ein Nachteil dieser Befestigungsart durch eine Schraubverbindung besteht auch darin, dass an der Verschraubungsstelle die korrosionsschützende Kathodentauchlackierung (KTL) der Karosserie beschädigt wird, was in der Folge zu Korrosionsschäden führen kann.

Ein weiterer Nachteil dieser herkömmlichen Montageart mittels einer Schraubverbindung besteht darin, dass die Position der einzelnen Ausstattungskomponenten nach dem Festschrauben festgelegt ist und nur mit großem Aufwand verändert werden kann. Dies hat wiederum zur Folge, dass die einzelnen Ausstattungskomponenten der Innenausstattung nur mit großem Aufwand neu angeordnet werden können, was insbesondere bei einem Verkauf eines Omnibusses störend ist.

Ferner ist zum Stand der Technik hinzuweisen auf DE 200 16 400 U1, DE 100 41 899 A1, DE 27 19 455 A1, EP 0 803 403 A1, EP 0 857 592 A2, DE42 15 259 A1, DE 34 24 690 A1, CH 630 574 A5, DE 26 35 439 A1, US 5,051,047 A, DE 101 13 667 A1, FR 2 926 062 A1, US 2011/115256 A1, CH 612 381 A5.

Schließlich offenbart JP 2006 341781 A eine Befestigungseinrichtung gemäß dem Oberbegriff von Anspruch 1.

Nachteilig an dieser bekannten Befestigungseinrichtung ist jedoch, dass Klappergeräusche auftreten können.
Der Erfindung liegt deshalb die Aufgabe zugrunde, eine verbesserte Befestigungsart zur Befestigung von Ausstattungskomponenten in einem Omnibus zu schaffen.

Diese Aufgabe wird durch eine erfindungsgemäße Befestigungseinrichtung gemäß dem Hauptanspruch gelöst.

Die Erfindung umfasst die allgemeine technische Lehre, die Ausstattungskomponenten nicht durch eine Schraubverbindung zu befestigen, sondern mittels einer Montageschiene, die an der Seitenwand des Kraftfahrzeugs befestigt werden kann und an der die Ausstattungskomponenten befestigt werden können.

Hierbei ist zu erwähnen, dass die Erfindung nicht nur Schutz beansprucht für Befestigungseinrichtungen, bei denen sämtliche Ausstattungskomponenten mittels einer Montageschiene befestigt sind. Vielmehr beansprucht die Erfindung auch Schutz für eine Befestigungseinrichtung, bei der nur ein Teil der Ausstattungskomponenten mittels einer Montageschiene befestigt ist, während ein anderer Teil der Ausstattungskomponenten in anderer Weise befestigt sein kann, beispielsweise mittels einer herkömmlichen Schraubverbindung.

Die Befestigung der Ausstattungskomponenten mittels einer Montageschiene bietet den Vorteil, dass die Ausstattungskomponenten entlang der Montageschiene in verschiedenen Positionen variabel positioniert werden können. In einem bevorzugten Ausführungsbeispiel der Erfindung sind die Ausstattungskomponenten in Längsrichtung der Montage sogar stufenlos in beliebigen Positionen montierbar. Darüber hinaus besteht im Rahmen der Erfindung die Möglichkeit, dass die Ausstattungskomponenten im montierten bzw. teilmontierten Zustand ohne eine vorherige Demontage der Ausstattungskomponenten entlang der Montageschiene verschiebbar sind, was eine äußerst einfache Umkonfigurierung der Innenausstattung ermöglicht.

Ferner ist zu erwähnen, dass die Montageschiene bei der erfindungsgemäßen Befestigungseinrichtung vorzugsweise in Längsrichtung des Kraftfahrzeugs verläuft und eine Länge von mehr als 2m, 4m, 6m oder sogar mehr als 8m aufweist. Darüber hinaus ist vorzugsweise an den beiden gegenüberliegenden Seitenwänden des Kraftfahrzeugs im Innenraum jeweils mindestens eine Montageschiene angebracht. Hierbei besteht auch die Möglichkeit, dass an den Seitenwänden jeweils übereinander mehrere Montageschienen angebracht sind. Darüber hinaus kann eine Montageschiene auch im Motorwagen (Heckteil) eines Gelenkbusses angebracht werden.

Im Rahmen der Erfindung können an der Montageschiene verschiedene Ausstattungskomponenten befestigt werden, wie beispielsweise ein Haltegriff, eine Fensterschutzstange oder eine Trennwand. Die Erfindung ist jedoch hinsichtlich der an der Montageschiene anzubringenden Ausstattungskomponenten nicht auf die vorstehend genannten Beispiele beschränkt, sondern auch mit anderen Ausstattungskomponenten realisierbar.

In einem bevorzugten Ausführungsbeispiel der Erfindung ist die Ausstattungskomponente jeweils durch eine Schraubverbindung und/oder durch eine formschlüssige Verbindung mit der Montageschiene verbunden. Vorzugsweise ist die Ausstattungskomponente zunächst durch eine Schraubverbindung mit einem Gewindeteil verbunden, das wiederum durch eine formschlüssige Verbindung mit der Montageschiene verbunden ist. Das Gewindeteil ist hierzu in die Montageschiene einsetzbar, wobei das Gewindeteil im eingesetzten Zustand durch eine formschlüssige Verbindung mit der Montageschiene verbunden ist und zur Aufnahme einer Befestigungsschraube ein Innengewinde aufweist. Zur Aufnahme des Gewindeteils weist die Montageschiene an ihrer Innenseite vorzugsweise eine Aufnahmenut auf, in die das Gewindeteil einsetzbar ist. Das Einsetzen des Gewindeteils in die Montageschiene kann beispielsweise durch eine Schwenkbewegung erfolgenHierzu kann die Montageschiene im Bereich der Aufnahmenut für das Gewindeteil eine abgerundete Längskante aufweisen, die mit einer in Längsrichtung verlaufenden Rundnut in dem Gewindeteil ein Scharnier bildet, so dass das Gewindeteil beim Einsetzen in die Montageschiene eine Schwenkbewegung um die Längsachse ausführen kann. Zum Einsetzen des Gewindeteils in die Montageschiene wird das Gewindeteil also mit seiner Rundnut auf die abgerundete Längskante der Aufnahmenut aufgesetzt und dann um die Längsachse geschwenkt, bis das Gewindeteil vollständig von der Aufnahme in der Montageschiene aufgenommen wird.

Bei der Befestigung von Ausstattungskomponenten in einem Kraftfahrzeug (z.B. Omnibus) sollen Klappergeräusche während der Fahrt nach Möglichkeit verhindert werden. Hierzu dient bei der erfindungsgemäßen Befestigungseinrichtung ein Federblech, das in die Montageschiene eingesetzt werden kann, um störende Klappergeräusche zu vermeiden. Im montierten Zustand spannt das Federblech die mechanische Verbindung zwischen der jeweiligen Ausstattungskomponente und der Montageschiene mechanisch vor, wodurch Klappergeräusche effektiv verhindert werden. Teilweise verläuft das Federblech vorzugsweise zwischen dem Gewindeteil und der Montageschiene einerseits und der Ausstattungskomponente andererseits, wobei das Federblech zur Durchführung der Befestigungsschraube vorzugsweise eine Bohrung aufweist. An der gegenüberliegenden Seite ist das Federblech dagegen vorzugsweise in eine in Längsrichtung verlaufende Aufnahmenut in der Montageschiene eingesetzt, wobei diese Aufnahmenut für das Federblech im Querschnitt vorzugsweise bogenförmig verläuft.

Neben der Vermeidung von Klappergeräuschen dient das Federblech auch zur zusätzlichen Aufnahme von Kräften, da sonst die Gefahr eines Ausdrehens des Gewindeteils besteht, wenn beispielsweise von oben gegen eine Fensterschutzstange gedrückt wird.

In dem bevorzugten Ausführungsbeispiel der Erfindung ist die Montageschiene mit einer inneren Seitenwandverkleidung des Kraftfahrzeugs verbunden. Hierzu kann die Montageschiene eine Längsnut aufweisen, die vorzugsweise an der Unterseite der Montageschiene angeordnet und nach unten offen ist, wobei die Längsnut eine obere Längskante der Seitenwandverkleidung aufnimmt.

Ferner ist die Montageschiene bei der erfindungsgemäßen Befestigungseinrichtung vorzugsweise auch mit einer Brüstungsleiste verbunden, die entlang einer Fensterbrüstung des Kraftfahrzeugs verläuft, d.h. unterhalb des Fensterrahmens. Zur Aufnahme der Brüstungsleiste weist die Montageschiene vorzugsweise eine Längsnut auf, die vorzugsweise an der Oberseite der Montageschiene angeordnet und nach oben offen ist, wobei die Brüstungsleiste einen nach unten abstehenden Schenkel aufweisen kann, der in montiertem Zustand von der Längsnut in der Brüstungsleiste aufgenommen wird. Vorzugsweise bildet der nach unten abstehende Schenkel der Brüstungsleiste mit der nach oben offenen Längsnut der Montageschiene eine Klemmverbindung, so dass der Schenkel der Brüstungsleiste vorzugsweise elastisch ist, um einen sicheren Halt der Klemmverbindung zwischen der Brüstungsleiste und der Montageschiene zu erreichen. Darüber hinaus kann die Montageschiene zur mechanischen Verbindung mit der Brüstungsleiste auch einen nach oben abstehenden und in Längsrichtung verlaufenden Schenkel aufweisen, an dem sich ein nach unten abstehender weiterer Schenkel der Brüstungsleiste außen abstützen kann. Schließlich kann die Brüstungsleiste einen dritten Schenkel aufweisen, der ebenfalls nach unten absteht und die obere Längskante der Montageschiene an der Innenseite abdeckt.

In einer anderen Variante der Erfindung weist die Montageschiene dagegen zur Aufnahme der Brüstungsleiste an ihrer Oberseite zwei Längsnuten auf, in die jeweils ein Schenkel an der Unterseite der Brüstungsleiste eingreift.

Die Montageschiene ist vorzugsweise an der inneren Seitenwand des Kraftfahrzeugs durch eine stoffschlüssige Verbindung (z.B. Klebeverbindung) angebracht, so dass die Lackierung der Kraftfahrzeugkarosserie durch die Anbringung der Montageschiene nicht beschädigt werden muss, so dass der durch die Lackierung erreichte Korrosionsschutz nicht beeinträchtigt wird. Beispielsweise kann die Montageschiene an einem Längsholm der Karosserie des Kraftfahrzeugs festgeklebt werden. Es besteht jedoch alternativ auch die Möglichkeit, dass die Montageschiene an der inneren Seitenwand des Kraftfahrzeugs festgeschraubt oder festgenietet ist.

Zur Erreichung einer möglichst belastbaren mechanischen Verbindung zwischen der Montageschiene und dem Längsholm kann die Montageschiene einen Schenkel aufweisen, der an der Außenseite der Montageschiene nach außen absteht und in montiertem Zustand oben auf dem Längsholm der Karosserie des Kraftfahrzeugs aufliegt, so dass vertikale mechanische Belastungen der Montageschiene von dem Schenkel aufgenommen werden und die Klebeverbindung nicht belasten.

Ferner ist zu erwähnen, dass die Erfindung nicht nur Schutz beansprucht für die vorstehend beschriebene erfindungsgemäße Befestigungseinrichtung als Einbauteil. Vielmehr beansprucht die Erfindung auch Schutz für ein komplettes Kraftfahrzeug (z.B. Omnibus), das mit einer solchen Befestigungseinrichtung ausgestattet ist.

Andere vorteilhafte Weiterbildungen der Erfindung sind in den Unteransprüchen gekennzeichnet oder werden nachstehend zusammen mit der Beschreibung der bevorzugten Ausführungsbeispiele der Erfindung anhand der Figuren näher erläutert. Es zeigen:
- Figur 1: eine seitliche Innenansicht eines Omnibusses mit einer erfindungsgemäßen Befestigungseinrichtung zur Befestigung von Ausstattungskomponenten,
- Figur 2: eine Querschnittsansicht durch die Befestigungseinrichtung gemäß Figur 1,
- Figur 3A: eine Querschnittsansicht durch eine Montageschiene der Befestigungseinrichtung gemäß Figur 2,
- Figur 3B: eine Perspektivansicht der Montageschiene gemäß Figur 3A,
- Figur 4: eine Querschnittsansicht der Montageschiene gemäß den Figuren 3A und 3B beim Einsetzen eines Gewindeteils,
- Figur 5: eine Perspektivansicht des Gewindeteils gemäß Figur 4,
- Figur 6: eine Querschnittsansicht der Montageschiene mit eingesetztem Gewindeteil beim Einsetzen eines Federbleches zur Vermeidung von Klappergeräuschen,
- Figur 7: eine Perspektivansicht des Federblechs aus Figur 6,
- Figur 8: eine Querschnittsansicht der Montageschiene mit dem eingesetzten Gewindeteil, dem eingesetzten Federblech und einer daran festgeschraubten Ausstattungskomponente,
- Figur 9: eine Querschnittsansicht durch eine Abwandlung der Befestigungseinrichtung gemäß den Figuren 1 bis 8,
- Figur 10: eine Querschnittsansicht der Montageschiene der Befestigungseinrichtung gemäß Figur 9,
- Figur 11: eine Querschnittsansicht der Montageschiene gemäß Figur 10 beim Einsetzen des Gewindeteils,
- Figur 12: eine Querschnittsansicht der Montageschiene gemäß den Figuren 10 und 11 mit eingesetztem Gewindeteil beim Einsetzen des Federblechs,
- Figur 13: eine Perspektivansicht der Montageschiene gemäß den Figuren 9 bis 12,
- Figur 14: eine Perspektivansicht des Gewindeteils aus den Figuren 9 bis 12,
- Figur 15: eine Perspektivansicht des Federblechs der Befestigungseinrichtung aus den Figuren 9 bis 14.

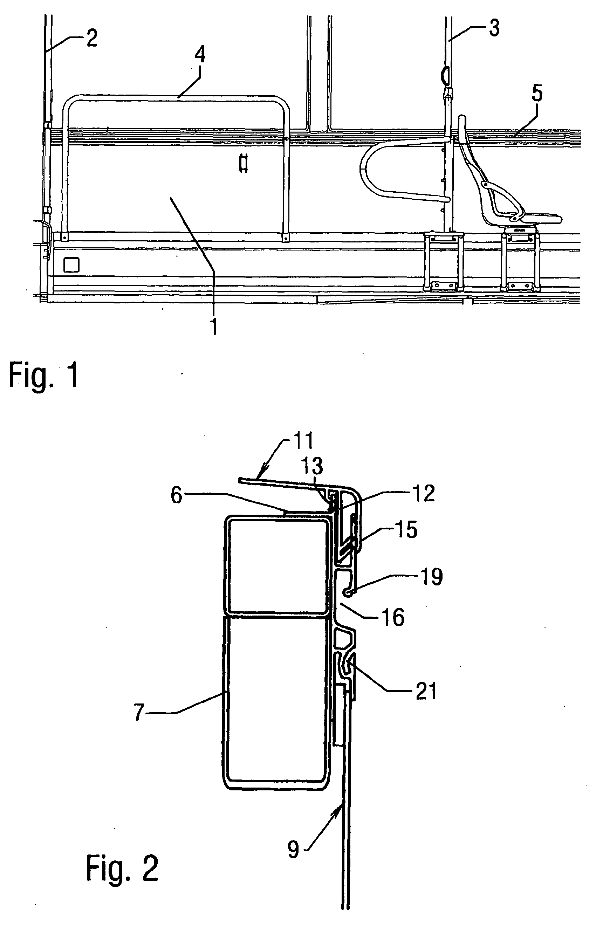

Figur 1 zeigt eine Innensicht einer Seitenwand 1 eines Omnibusses mit einer erfindungsgemäßen Befestigungseinrichtung zur Befestigung von Ausstattungskomponenten, wie beispielweise Trennwänden 2, 3 oder einer Fensterschutzstange 4.

Die Befestigung der Ausstattungskomponenten erfolgt hierbei mittels einer Montageschiene 5, die innen an der Seitenwand 1 des Omnibusses festgeklebt ist und sich unterhalb der Fensterbrüstung in Längsrichtung des Omnibusses erstreckt.

Die Montageschiene 5 weist einen in waagerechter Richtung nach außen abstehenden Schenkel 6 aus, der in montiertem Zustand oben auf einem Längsholm 7 der Karosserie des Omnibusses aufliegt und dadurch vertikale Belastungen aufnehmen kann. Die Montageschiene 5 ist hierbei durch eine Klebeverbindung zwischen der Außenseite der Montageschiene 5 und der Innenseite des Längsholms sowie zwischen der Unterseite des Schenkels 6 und der Oberseite des Längsholms 7 an der Karosserie des Omnibusses befestigt. Hierbei ist zu bemerken, dass die Klebeverbindung zwischen der Montageschiene 5 und der Karosserie des Omnibusses die Lackierung der Karosserie des Omnibusses nicht beschädigt und dadurch den Korrosionsschutz nicht beeinträchtigt.

An ihrer Unterseite weist die Montageschiene 5 eine Längsnut 8 auf, die nach unten offen ist und in die im montierten Zustand eine obere Längskante einer inneren Seitenwandverkleidung 9 eingeführt ist.

Ferner weist die Montageschiene 5 an ihrer Oberseite eine nach oben offene Längsnut 10 auf, die zur Montage einer Brüstungsleiste 11 dient. Hierzu weist die Brüstungsleiste 11 an ihrer Unterseite einen mittleren Schenkel 12 auf, der nach unten ragt und in montiertem Zustand federnd von der Längsnut 10 in der Montageschiene 5 aufgenommen wird.

Darüber hinaus weist die Brüstungsleiste 11 an ihrer Unterseite außen einen weiteren Schenkel 13 auf, der sich außen federnd an einem nach oben ragenden Schenkel 14 der Montageschiene 5 abstützt.

Schließlich weist die Brüstungsleiste 11 an ihrer dem Innenraum zugewandten Seite einen weiteren Schenkel 15 auf, das die obere Innenkante der Montageschiene 5 innenraumseitig abdeckt.

Die Brüstungsleiste 11 kann also bei der Montage einfach auf die Montageschiene 5 aufgesteckt werden und ist dann durch eine Klemmverbindung mit der Montageschiene 5 verbunden.

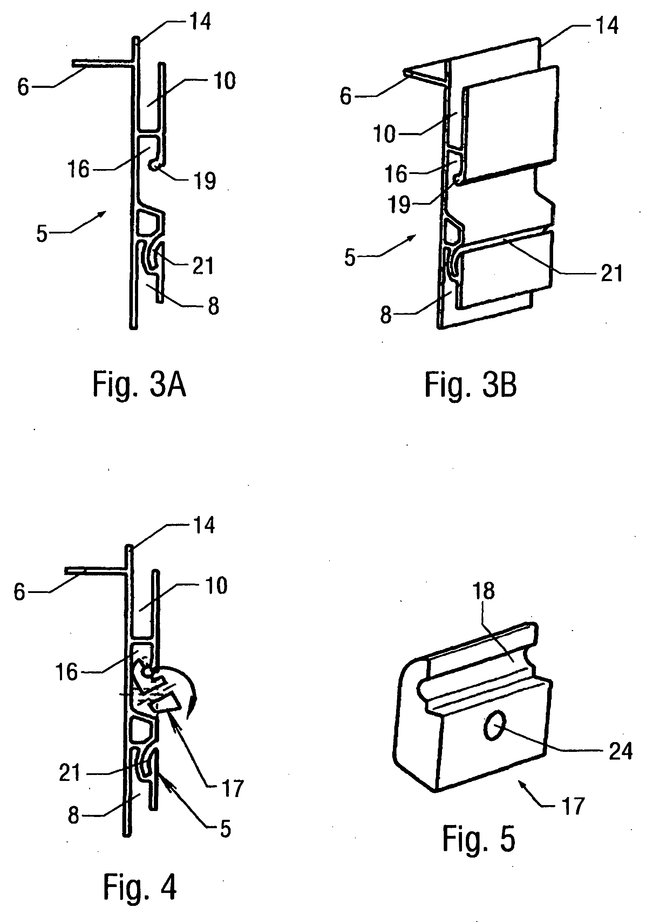

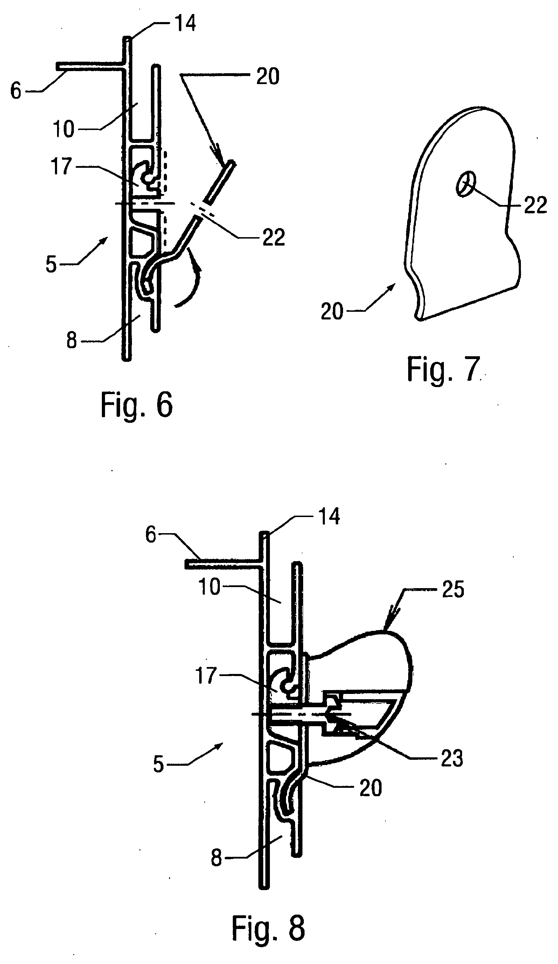

Zur Montage der Ausstattungskomponenten weist die Montageschiene 5 eine Aufnahmenut 16 auf, in die ein Gewindeteil 17 durch eine Schwenkbewegung eingesetzt werden kann, wie aus Figur 4 ersichtlich ist. Das Gewindeteil 17 weist hierzu eine Rundnut 18 auf, die mit einer entsprechend abgerundeten Längskante 19 im Bereich der Aufnahmenut 16 ein Scharnier bildet. Bein Einsetzen des Gewindeteils 17 in die Montageschiene 5 wird das Gewindeteil 17 so platziert, dass die abgerundete Längskante 19 in der Rundnut 18 des Gewindeteils 17 aufgenommen wird. Anschließend wird das Gewindeteil 17 dann in Figur 4 in Pfeilrichtung geschwenkt, bis das Gewindeteil 17 vollständig von der Montageschiene 5 aufgenommen wird, wie in Figur 6 dargestellt ist.

Anschließend wird dann ein Federblech 20 in eine im Querschnitt bogenförmig verlaufende Aufnahmenut 21 eingesetzt und mit seinem oberen Ende gegen die Montageschiene 5 gedrückt, wodurch eine mechanische Vorspannung erzeugt wird, die im montiertem Zustand Klappergeräusche verhindert.

In dem Federblech 20 befindet sich eine Bohrung 22 zur Durchführung einer Befestigungsschraube 23, die in ein Innengewinde 24 in dem Gewindeteil 17 eingeschraubt werden kann, wobei die Befestigungsschraube 23 zum Festschrauben einer Ausstattungskomponente 25 dient, die in Figur 8 nur schematisch dargestellt ist.

Die Ausstattungskomponente 25 ist also durch eine Schraubverbindung mit dem Gewindeteil 17 verbunden, während das Gewindeteil 17 durch eine formschlüssige Verbindung mit der Montageschiene 5 verbunden ist, wohingegen die Montageschiene 5 durch eine stoffschlüssige Klebeverbindung mit dem Längsholm 7 der Karosserie des Omnibusses verbunden ist.

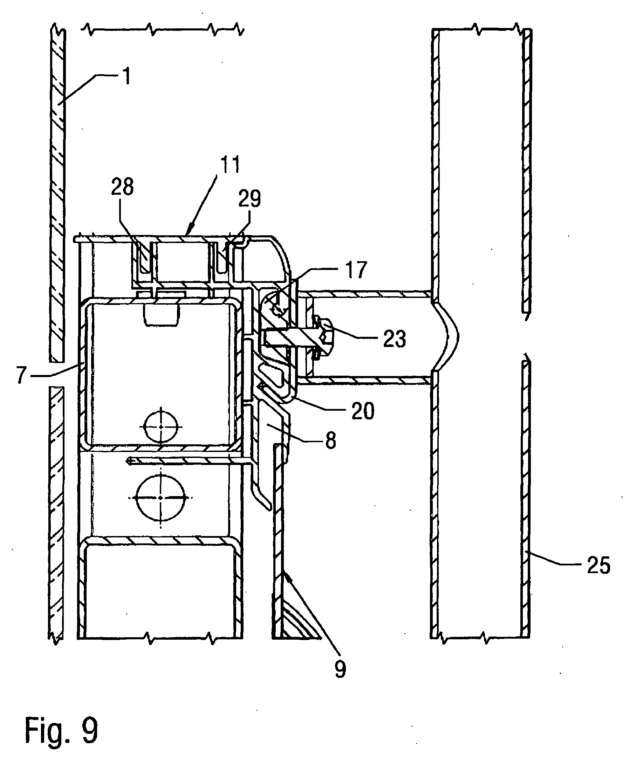

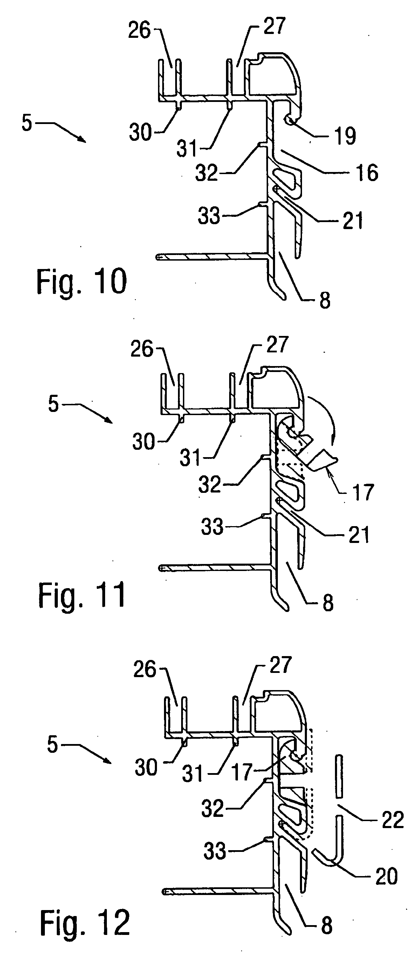

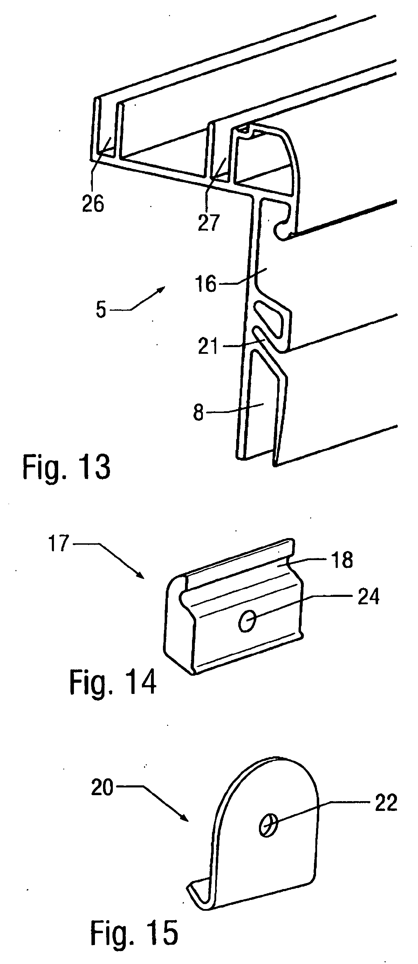

Das Ausführungsbeispiel gemäß den Figuren 9 bis 15 stimmt weitgehend mit dem vorstehend beschriebenen und in den Figuren 1 bis 8 dargestellten Ausführungsbeispiel überein, so dass zur Vermeidung von Wiederholungen auf die vorstehende Beschreibung verwiesen wird, wobei für entsprechende Einzelheiten dieselben Bezugszeichen verwendet werden.

Eine Besonderheit dieses Ausführungsbeispiels besteht darin, dass die Montageschiene an ihrer Oberseite zur Befestigung der Brüstungsleite 11 zwei Längsnuten 26, 27 aufweist, in die zwei nach unten abstehende Schenkel 28, 29 der Brüstungsleiste eingreifen und dabei eine Klemmverbindung bilden.

Darüber hinaus weist die Montageschiene 5 an ihrer horizontalen und vertikalen Klebefläche, an der die Montageschiene 5 mit dem Längsholm 7 verklebt wird, jeweils zwei Längsrippen 30, 31, 32, 33 auf, die in Fahrzeuglängsrichtung verlaufen und als Abstandshalter eine definierte Spaltbreite des Klebespaltes zwischen dem Längsholm 7 und der Montageschiene 5 sicherstellen.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen.

### Bezugszeichenliste:

- 1: Seitenwand
- 2: Trennwand
- 3: Trennwand
- 4: Fensterschutzstange
- 5: Montageschiene
- 6: Schenkel
- 7: Längsholm
- 8: Längsnut
- 9: Seitenwandverkleidung
- 10: Längsnut
- 11: Brüstungsleiste
- 12: Schenkel
- 13: Schenkel
- 14: Schenkel
- 15: Schenkel
- 16: Aufnahmenut
- 17: Gewindeteil
- 18: Rundnut
- 19: Längskante
- 20: Federblech
- 21: Aufnahmenut
- 22: Bohrung
- 23: Befestigungsschraube
- 24: Innengewinde
- 25: Ausstattungskomponente
- 26: Längsnut
- 27: Längsnut
- 28: Schenkel
- 29: Schenkel
- 30: Längsrippe
- 31: Längsrippe
- 32: Längsrippe
- 33: Längsrippe

## Patentansprüche

1. Befestigungseinrichtung zur Befestigung von Ausstattungskomponenten (2, 3, 4; 25) an einer Seitenwand (1) im Innenraum eines Kraftfahrzeugs, insbesondere eines Omnibusses, mit
a) einer Montageschiene (5), die an der Seitenwand (1) des Kraftfahrzeugs befestigt werden kann und an der die Ausstattungskomponenten (2, 3, 4; 25) befestigt werden können, und
b) einem Gewindeteil (17), das in die Montageschiene (5) eingesetzt ist, wobei das Gewindeteil (17) im eingesetzten Zustand durch eine formschlüssige Verbindung mit der Montageschiene (5) verbunden ist und zur Aufnahme einer Befestigungsschraube (23) ein Innengewinde (24) aufweist,
**dadurch gekennzeichnet,**
c) **dass** zur Vermeidung von Klappergeräuschen und/oder zur zusätzlichen Aufnahme von Kräften ein Federblech (20) in die Montageschiene (5) eingesetzt ist, und
d) **dass** das Federblech (20) die mechanische Verbindung zwischen der Ausstattungskomponente (2, 3, 4; 25) und der Montageschiene (5) mechanisch vorspannt, um die Klappergeräusche zu vermeiden.

2. Befestigungseinrichtung nach Anspruch 1,
**dadurch gekennzeichnet,**
a) **dass** die Ausstattungskomponenten (2, 3, 4; 25) entlang der Montageschiene (5) in verschiedenen Positionen variabel positioniert werden können, insbesondere stufenlos, und/oder
b) **dass** die Ausstattungskomponenten (2, 3, 4; 25) ohne eine Demontage der Ausstattungskomponenten (2, 3, 4; 25) entlang der Montageschiene (5) verschiebbar sind, und/oder
c) **dass** die Montageschiene (5) eine Länge von mehr als 2m, 4m, 6m oder mehr als 8m aufweist.

3. Befestigungseinrichtung nach einem der vorhergehenden Ansprüche,
**dadurch gekennzeichnet, dass** mindestens eine der folgende Ausstattungskomponenten (2, 3, 4; 25) an der Montageschiene (5) befestigt ist:
a) ein Haltegriff,
b) eine Fensterschutzstange (4),
c) eine Trennwand (2, 3).

4. Befestigungseinrichtung nach einem der vorhergehenden Ansprüche,
**dadurch gekennzeichnet,**
a) **dass** die Ausstattungskomponente (2, 3, 4; 25) durch eine Schraubverbindung (23, 24) und/oder durch eine formschlüssige Verbindung mit der Montageschiene (5) verbunden ist, und/oder
b) **dass** die Montageschiene (5) an ihrer Innenseite eine Aufnahmenut (16) aufweist, in die das Gewindeteil (17) einsetzbar ist, und/oder
c) **dass** die Montageschiene (5) im Bereich der Aufnahmenut (16) für das Gewindeteil (17) eine abgerundete Längskante (19) aufweist, die mit einer in Längsrichtung verlaufenden Rundnut in dem Gewindeteil (17) ein Scharnier bildet, so dass das Gewindeteil (17) beim Einsetzen in die Montageschiene (5) eine Schwenkbewegung um die Längsachse ausführen kann.

5. Befestigungseinrichtung nach einem der vorhergehenden Ansprüche,
**dadurch gekennzeichnet,**
a) **dass** das Federblech (20) teilweise zwischen dem Gewindeteil (17) und der Montageschiene (5) einerseits und der Ausstattungskomponente (2, 3, 4; 25) andererseits verläuft, und/oder
b) **dass** das Federblech (20) zur Durchführung der Befestigungsschraube (23) eine Bohrung (22) aufweist, und/oder
c) **dass** das Federblech (20) in eine in Längsrichtung verlaufende Aufnahmenut (21) in der Montageschiene (5) eingesetzt ist, und/oder
d) **dass** die Aufnahmenut (21) für das Federblech (20) im Querschnitt bogenförmig verläuft.

6. Befestigungseinrichtung nach einem der vorhergehenden Ansprüche,
**dadurch gekennzeichnet,**
a) **dass** die Montageschiene (5) mit einer inneren Seitenwandverkleidung (9) für ein Kraftfahrzeug verbunden ist, und/oder
b) **dass** die Montageschiene (5) zur Aufnahme der Seitenwandverkleidung (9) eine Längsnut aufweist, und/oder
c) **dass** die Längsnut zur Aufnahme der Seitenwandverkleidung (9) an der Unterseite der Montageschiene (5) angeordnet und nach unten offen ist und eine obere Längskante der Seitenwandverkleidung (9) aufnimmt.

7. Befestigungseinrichtung nach einem der vorhergehenden Ansprüche,
**dadurch gekennzeichnet,**
a) **dass** die Montageschiene (5) mit einer Brüstungsleiste (11) verbunden ist, wobei die Brüstungsleiste (11) entlang einer Fensterbrüstung für ein Kraftfahrzeug verläuft, und/oder
b) **dass** die Montageschiene (5) zur Aufnahme der Brüstungsleiste (11) eine Längsnut (10) aufweist, und/oder
c) **dass** die zur Aufnahme der Brüstungsleiste (11) dienende Längsnut (10) an der Oberseite der Montageschiene (5) angeordnet und nach oben offen ist und einen ersten Schenkel (12) aufnimmt, der von der Brüstungsleiste (11) nach unten absteht, und/oder
d) **dass** der nach unten ragende erste Schenkel (12) der Brüstungsleiste (11) elastisch ist und eine Klemmverbindung mit der Längsnut (10) der Montageschiene (5) bildet, und/oder
e) **dass** die Montageschiene (5) zur Halterung der Brüstungsleiste (11) einen nach oben abstehenden und in Längsrichtung der Montageschiene (5) verlaufenden ersten Schenkel (14) aufweist, und/oder
f) **dass** die Brüstungsleiste (11) einen nach unten abstehenden und in Längsrichtung der Montageschiene (5) verlaufenden zweiten Schenkel (13) aufweist, der sich außen an dem nach oben abstehenden ersten Schenkel (14) der Montageschiene (5) abstützt, und/oder
g) **dass** der nach unten abstehende zweite Schenkel (13) der Brüstungsleiste (11) elastisch ist und sich federnd an dem nach oben abstehenden ersten Schenkel (14) der Montageschiene (5) abstützt, und/oder
h) **dass** die Brüstungsleiste (11) einen dritten Schenkel (15) aufweist, der die obere Längskante der Montageschiene (5) an der Innenseite abdeckt.

8. Befestigungseinrichtung nach einem der vorhergehenden Ansprüche,
**dadurch gekennzeichnet,**
a) **dass** die Montageschiene (5) zur Aufnahme einer Brüstungsleiste (11) an ihrer Oberseite zwei Längsnuten (26, 27) aufweist, und
b) **dass** die Brüstungsleiste (11) an ihrer Unterseite zwei in Längsrichtung verlaufende Schenkel (28, 29) aufweist, die von der Brüstungsleiste (11) nach unten abstehen und im montierten Zustand von den beiden Längsnuten (26, 27) an der Oberseite der Montageschiene (5) aufgenommen werden.

9. Befestigungseinrichtung nach einem der vorhergehenden Ansprüche,
**dadurch gekennzeichnet, dass** die Montageschiene (5) zur mechanischen Abstützung an einem Längsholm (7) für ein Kraftfahrzeug einen zweiten Schenkel (6) aufweist, der von der Montageschiene (5) im Wesentlichen waagerecht nach außen absteht und im montierten Zustand vorzugsweise oben auf dem Längsholm (7) aufliegt.

10. Kraftfahrzeug, insbesondere Omnibus, mit einer Befestigungseinrichtung nach einem der vorhergehenden Ansprüche und mindestens einer Ausstattungskomponente (2, 3, 4; 25), die an der Befestigungseinrichtung befestigt ist.

11. Kraftfahrzeug nach Anspruch 10,
**dadurch gekennzeichnet,**
a) **dass** die Montageschiene (5) durch eine stoffschlüssige Verbindung, insbesondere durch eine Klebeverbindung, oder durch eine Schraubverbindung oder durch eine Nietverbindung an einer Karosserie des Kraftfahrzeugs befestigt ist, und/oder
b) **dass** die stoffschlüssige Verbindung den nach außen abstehenden zweiten Schenkel der Montageschiene (5) und/oder die Außenseite der Montageschiene (5) mit dem Längsholm (7) des Kraftfahrzeugs verbindet, und/oder
c) **dass** die Montageschiene (5) an ihren Klebeflächen mindestens einen Abstandshalter (30-33) aufweist, um eine definierte Spaltbreite des resultierenden Klebespalts zwischen der Montageschiene (5) und dem Längsholm (7) einzustellen.

## Claims

1. A fixing device for fixing equipment components (2, 3, 4; 25) to a side wall (1) in the interior of a motor vehicle, in particular of a bus, with
a) a mounting rail (5) which can be fixed to the side wall (1) of the motor vehicle and to which the equipment components (2, 3, 4; 25) can be fixed, and
b) a threaded part (17) which is inserted into the mounting rail (5), wherein the threaded part (17) is connected in the inserted state to the mounting rail (5) by an interlocking connection and has an internal thread (24) for receiving a fixing screw (23),
**characterized**
c) **in that**, in order to avoid rattling noises and/or for the additional absorption of forces, a spring steel sheet (20) is inserted into the mounting rail (5), and
d) **in that** the spring steel sheet (20) mechanically prestresses the mechanical connection between the equipment component (2, 3, 4; 25) and the mounting rail (5) in order to avoid the rattling noises.

2. The fixing device according to Claim 1,
**characterized**
a) **in that** the equipment components (2, 3, 4; 25) can be positioned variably, in particular infinitely variably, in various positions along the mounting rail (5), and/or
b) **in that** the equipment components (2, 3, 4; 25) are displaceable along the mounting rail (5) without removal of the equipment components (2, 3, 4; 25), and/or
c) **in that** the mounting rail (5) has a length of more than 2 m, 4 m, 6 m or more than 8 m.

3. The fixing device according to one of the preceding claims, **characterized in that** at least one of the following equipment components (2, 3, 4; 25) is fixed to the mounting rail (5):
a) a grab handle,
b) a window protection rod (4),
c) a partition (2, 3).

4. The fixing device according to one of the preceding claims, **characterized**
a) **in that** the equipment component (2, 3, 4; 25) is connected to the mounting rail (5) by a screw connection (23, 24) and/or by an interlocking connection, and/or
b) **in that** the mounting rail (5) has, on the inner side thereof, a receiving groove (16) into which the threaded part (17) is insertable, and/or
c) **in that** the mounting rail (5) has, in the region of the receiving groove (16) for the threaded part (17), a rounded longitudinal edge (19) which, with a round groove running in the longitudinal direction in the threaded part (17), forms a hinge such that the threaded part (17), on insertion into the mounting rail (5), can execute a pivoting movement about the longitudinal axis.

5. The fixing device according to one of the preceding claims, **characterized**
a) **in that** the spring steel sheet (20) runs partially between the threaded part (17) and the mounting rail (5), on the one hand, and the equipment component (2, 3, 4; 25) on the other hand, and/or
b) **in that** the spring steel sheet (20) has a bore (22) for the passage of the fastening screw (23), and/or
c) **in that** the spring steel sheet (20) is inserted into a receiving groove (21) running in the longitudinal direction in the mounting rail (5), and/or
d) **in that** the receiving groove (21) has an arcuate profile in cross section for the spring steel sheet (20).

6. The fixing device according to one of the preceding claims,
**characterized**
a) **in that** the mounting rail (5) is connected to an inner side wall lining (9) for a motor vehicle, and/or
b) **in that** the mounting rail (5) has a longitudinal groove for receiving the side wall lining (9), and/or
c) **in that** the longitudinal groove for receiving the side wall lining (9) is arranged on the lower side of the mounting rail (5) and is open downwards and receives an upper longitudinal edge of the side wall lining (9).

7. The fixing device according to one of the preceding claims, **characterized**
a) **in that** the mounting rail (5) is connected to a sill strip (11), wherein the sill strip (11) runs along a window sill for a motor vehicle, and/or
b) **in that** the mounting rail (5) has a longitudinal groove (10) for receiving the sill strip (11), and/or
c) **in that** the longitudinal groove (10) serving for receiving the sill strip (11) is arranged on the upper side of the mounting rail (5) and is open upwards and receives a first limb (12) which protrudes downwards from the sill strip (11), and/or
d) **in that** the downwardly protruding first limb (12) of the sill strip (11) is elastic and forms a clamping connection to the longitudinal groove (10) of the mounting rail (5), and/or
e) **in that** the mounting rail (5) has, for holding the sill strip (11), a first limb (14) which protrudes upwards and runs in the longitudinal direction of the mounting rail (5), and/or
f) **in that** the sill strip (11) has a second limb (13) which protrudes downwards, runs in the longitudinal direction of the mounting rail (5) and is supported on the outside of the upwardly protruding first limb (14) of the mounting rail (5), and/or
g) **in that** the downwardly protruding second limb (13) of the sill strip (11) is elastic and is supported resiliently on the upwardly protruding first limb (14) of the mounting rail (5), and/or
h) **in that** the sill strip (11) has a third limb (15) which covers the upper longitudinal edge of the mounting rail (5) on the inner side.

8. The fixing device according to one of the preceding claims, **characterized**
a) **in that** the mounting rail (5) has two longitudinal grooves (26, 27) on the upper side thereof for receiving a sill strip (11), and
b) **in that** the lower side of the sill strip (11) has two limbs (28, 29) which run in the longitudinal direction, protrude downwards from the sill strip (11) and, in the mounted state, are accommodated by the two longitudinal grooves (26, 27) on the upper side of the mounting rail (5).

9. The fixing device according to one of the preceding claims, **characterized in that**, for the mechanical support on a longitudinal strut (7) for a motor vehicle, the mounting rail (5) has a second limb (6) which protrudes substantially horizontally outwards from the mounting rail (5) and, in the mounted state, preferably rests on top of the longitudinal strut (7).

10. A motor vehicle, in particular bus, with a fixing device according to one of the preceding claims, and with at least one equipment component (2, 3, 4; 25) which is fixed to the fixing device.

11. The motor vehicle according to Claim 10,
**characterized**
a) **in that** the mounting rail (5) is fixed to a body of the motor vehicle by an integrally bonded connection, in particular by an adhesive connection, or by a screw connection or by a rivet connection, and/or
b) **in that** the integrally bonded connection connects the outwardly protruding second limb of the mounting rail (5) and/or the outer side of the mounting rail (5) to the longitudinal strut (7) of the motor vehicle, and/or
c) **in that** the mounting rail (5) has at least one spacer (30-33) on the adhesive bonding surfaces thereof in order to set a defined gap width of the resulting adhesive bonding gap between the mounting rail (5) and the longitudinal strut (7).

## Revendications

1. Dispositif de fixation pour la fixation de composants d'équipement (2, 3, 4 ; 25) sur une paroi latérale (1) dans l'habitacle d'un véhicule automobile, en particulier d'un omnibus, comprenant
a) un rail de montage (5) qui peut être fixé à la paroi latérale (1) du véhicule automobile et auquel peuvent être fixés les composants d'équipement (2, 3, 4 ; 25), et
b) une partie filetée (17) qui est insérée dans le rail de montage (5), la partie filetée (17) étant connectée dans l'état inséré par une liaison par engagement par correspondance de formes au rail de montage (5) et présentant un filetage intérieur (24) pour recevoir une vis de fixation (23),
**caractérisé en ce que**
c) une tôle à ressort (20) est insérée dans le rail de montage (5) pour éviter les bruits de claquement et/ou pour une absorption supplémentaire des forces, et
d) la tôle à ressort (20) précontraint mécaniquement la liaison mécanique entre le composant d'équipement (2, 3, 4 ; 25) et le rail de montage (5), pour éviter les bruits de claquement.

2. Dispositif de fixation selon la revendication 1, **caractérisé en ce que**
a) les composants d'équipement (2, 3, 4 ; 25) peuvent être positionnés de manière variable le long du rail de montage (5) dans différentes positions, en particulier sans gradins, et/ou
b) les composants d'équipement (2, 3, 4 ; 25) peuvent être déplacés sans démontage des composants d'équipement (2, 3, 4 ; 25) le long du rail de montage (5), et/ou
c) le rail de montage (5) présente une longueur supérieure à 2 m, 4 m, 6 m ou supérieure à 8 m.

3. Dispositif de fixation selon l'une quelconque des revendications précédentes, **caractérisé en ce qu'**au moins l'un des composants d'équipement suivants (2, 3, 4 ; 25) est fixé au rail de montage (5) :
a) une poignée de retenue,
b) une barre de protection de fenêtre (4),
c) une cloison (2, 3).

4. Dispositif de fixation selon l'une quelconque des revendications précédents, **caractérisé en ce que**
a) le composant d'équipement (2, 3, 4 ; 25) est connecté par une connexion vissée (23, 24) et/ou par une connexion par engagement par correspondance de formes au rail de montage (5), et/ou
b) le rail de montage (5) présente au niveau de son côté intérieur une rainure de réception (16) dans laquelle peut être insérée la partie filetée (17), et/ou
c) le rail de montage (5) présente, dans la région de la rainure de réception (16) pour la partie filetée (17), une arête longitudinale arrondie (19) qui forme une charnière avec une rainure arrondie s'étendant dans la direction longitudinale dans la partie filetée (17), de telle sorte que la partie filetée (17), lors de l'insertion dans le rail de montage (5), puisse effectuer un mouvement de pivotement autour de l'axe longitudinal.

5. Dispositif de fixation selon l'une quelconque des revendications précédentes, **caractérisé en ce que**
a) la tôle à ressort (20) s'étend en partie entre la partie filetée (17) et le rail de montage (5) d'une part et le composant d'équipement (2, 3, 4 ; 25) d'autre part, et/ou
b) la tôle à ressort (20) présente un alésage (22) pour le guidage de la vis de fixation (23), et/ou
c) la tôle à ressort (20) est insérée dans une rainure de réception (21) s'étendant dans la direction longitudinale dans le rail de montage (5), et/ou
d) la rainure de réception (21) pour la tôle à ressort (20) s'étend sous forme courbe en section transversale.

6. Dispositif de fixation selon l'une quelconque des revendications précédentes, **caractérisé en ce que**
a) le rail de montage (5) est connecté à un habillage de paroi latérale intérieur (9) pour un véhicule automobile, et/ou
b) le rail de montage (5) présente une rainure longitudinale pour recevoir l'habillage de paroi latérale (9), et/ou
c) la rainure longitudinale pour recevoir l'habillage de paroi latérale (9) est disposée au niveau du côté inférieur du rail de montage (5) et est ouverte vers le bas et reçoit une arête longitudinale supérieure de l'habillage de paroi latérale (9).

7. Dispositif de fixation selon l'une quelconque des revendications précédentes, **caractérisé en ce que**
a) le rail de montage (5) est connecté à une baguette d'appui de fenêtre (11), la baguette d'appui de fenêtre (11) s'étendant le long d'un appui de fenêtre pour un véhicule automobile, et/ou
b) le rail de montage (5) présente une rainure longitudinale (10) pour recevoir la baguette d'appui de fenêtre (11), et/ou
c) la rainure longitudinale (10) prévue pour recevoir la baguette d'appui de fenêtre (11) est disposée au niveau du côté supérieur du rail de montage (5) et est ouverte vers le haut et reçoit une première branche (12) qui fait saillie vers le bas depuis la baguette d'appui de fenêtre (11), et/ou
d) la première branche (12) de la baguette d'appui de fenêtre (11) faisant saillie vers le bas est élastique et forme une liaison par serrage avec la rainure longitudinale (10) du rail de montage (5), et/ou
e) le rail de montage (5) présente une première branche (14) faisant saillie vers le haut pour la fixation de la baguette d'appui de fenêtre (11) et s'étendant dans la direction longitudinale du rail de montage (5), et/ou
f) la baguette d'appui de fenêtre (11) présente une deuxième branche (13) faisant saillie vers le bas et s'étendant dans la direction longitudinale du rail de montage (5), laquelle s'appuie à l'extérieur contre la première branche (14) du rail de montage (5) faisant saillie vers le haut, et/ou
g) la deuxième branche (13) de la baguette d'appui de fenêtre (11) faisant saillie vers le bas est élastique et s'appuie élastiquement contre la première branche (14) du rail de montage (5) faisant saillie vers le haut, et/ou
h) la baguette d'appui de fenêtre (11) présente une troisième branche (15) qui recouvre l'arête longitudinale supérieure du rail de montage (5) au niveau du côté intérieur.

8. Dispositif de fixation selon l'une quelconque des revendications précédentes, **caractérisé en ce que**
a) le rail de montage (5) présente deux rainures longitudinales (26, 27) pour recevoir une baguette d'appui de fenêtre (11) au niveau de son côté supérieur, et
b) la baguette d'appui de fenêtre (11) présente au niveau de son côté inférieur deux branches (28, 29) s'étendant dans la direction longitudinale, qui font saillie vers le bas depuis la baguette d'appui de fenêtre (11) et qui sont reçues dans l'état monté par les deux rainures longitudinales (26, 27) au niveau du côté supérieur du rail de montage (5).

9. Dispositif de fixation selon l'une quelconque des revendications précédentes, **caractérisé en ce que** le rail de montage (5) présente une deuxième branche (6) pour l'appui mécanique contre un longeron (7) pour un véhicule automobile, laquelle deuxième branche fait saillie depuis le rail de montage (5) essentiellement horizontalement vers l'extérieur et, dans l'état monté, repose de préférence par-dessus le longeron (7).

10. Véhicule automobile, en particulier omnibus, comprenant un dispositif de fixation selon l'une quelconque des revendications précédentes et au moins un composant d'équipement (2, 3, 4 ; 25) qui est fixé au dispositif de fixation.

11. Véhicule automobile selon la revendication 10, **caractérisé en ce que**
a) le rail de montage (5) est fixé par une connexion par liaison de matière, en particulier par une connexion collée ou par une connexion vissée ou par une connexion rivetée à une carrosserie du véhicule automobile, et/ou
b) la connexion par liaison de matière relie la deuxième branche du rail de montage (5) faisant saillie vers l'extérieur et/ou le côté extérieur du rail de montage (5) au longeron (7) du véhicule automobile, et/ou
c) le rail de montage (5) présente au niveau de ses surfaces de collage au moins un élément d'espacement (30-33) afin d'ajuster une largeur de fente définie de la fente de collage résultante entre le rail de montage (5) et le longeron (7).
